# EUROPÄISCHE PATENTSCHRIFT

(11) **EP 2 236 183 B1**
(45) Veröffentlichungstag und Bekanntmachung des Hinweises auf die Patenterteilung: **03.04.2013**
(21) Anmeldenummer: 10153061.6
(22) Anmeldetag: 09.02.2010
(51) Int. Cl.: B01D 27/06, B01D 29/11, B01D 37/02

(54) **Filtereinrichtung zur Filtration eines Fluids**
Filter device for filtering a fluid
Dispositif de filtre destiné à la filtration d'un fluide

(30) Priorität: 02.04.2009 DE 102009015631
(43) Veröffentlichungstag der Anmeldung: 06.10.2010
(73) Patentinhaber: Mann + Hummel GmbH, 71638 Ludwigsburg (DE)
(72) Erfinder: Koch, Eugen, 75328, Schömberg (DE)

(56) Entgegenhaltungen:
- DE-U1-202004 003 326
- US-A- 2 785 805
- US-A- 5 552 040

## Beschreibung

### Technisches Gebiet

Die Erfindung bezieht sich auf eine Filtereinrichtung zur Filtration eines Fluids nach dem Oberbegriff des Anspruches 1.

### Stand der Technik

Aus der EP 1 555 059 A1 ist ein Flüssigkeitsfilter für Brennkraftmaschinen bekannt, der als Additivfilter ausgebildet ist und mit einem Additiv versehen ist, welches beim Durchströmen des Filterelementes Wirkstoffe an das Fluid abgibt, die zu einer funktionalen Verbesserung der Eigenschaften des Fluids führen sollen. Ein Ausführungsbeispiel dieser Druckschrift zeigt ein zylindrisches Filterelement, das aus einem zickzackförmig gefalteten Filtermittel in zylindrischer Anordnung besteht, wobei in einige der radial nach außen offenen Falten des Filterelements das Additiv eingebracht ist. Das Filterelement wird von der zu reinigenden Flüssigkeit radial von außen nach innen durchströmt, so dass die Außenseite die Rohseite bildet und die Flüssigkeit in einen direkten Kontakt mit dem zur Rohseite hin offenen Additiv gelangt.

Dokument US 2 785 805 offenbart eine Filtervorrichtung zur Filtration eines Fluids, mit einem radial zu durchströmenden Filterelement, das aus einem zickzackförmig gefalteten Filtermittel besteht, wobei ein Band mit einem Additiv am Umfang des Filterelements (10) auf die außen liegenden Faltenspitzen aufgebracht ist.

Der Erfindung liegt die Aufgabe zu Grunde, eine Filtereinrichtung zur Filtration eines Fluids mit einfachen Maßnahmen und ohne Einschränkung der Filtrationsleistung so auszuführen, dass Wirkstoffe eines Additivs in den das Filterelement passierenden Fluidstrom abgegeben werden können.

### Offenbarung der Erfindung

Diese Aufgabe wird erfindungsgemäß mit den Merkmalen des Anspruches 1 gelöst. Die Unteransprüche geben zweckmäßige Weiterbildungen an.

Die erfindungsgemäße Filtereinrichtung wird vorzugsweise zur Filtration von Flüssigkeiten, insbesondere in Kraftfahrzeugen bzw. in Brennkraftmaschinen eingesetzt, beispielsweise zur Filtration von Kraftstoff, Öl, Kühlmittel oder dergleichen. Grundsätzlich möglich ist aber auch eine Anwendung zur Filtration gasförmiger Fluide, beispielsweise die Filtration der Ansaugluft in Brennkraftmaschinen oder der dem Fahrzeuginnenraum zuzuführenden Luft.

Das Filterelement, durch das das zu reinigende Fluid geleitet wird, besteht aus einem zickzackförmig gefalteten Filtermittel, an dem ein Additiv zur funktionalen Änderung der Fluideigenschaften angeordnet ist. Das Additiv weist chemische Substanzen bzw. Wirkstoffe auf, die bei der Durchströmung des Filterelements an das Fluid abgegeben werden und zur Verbesserung der Eigenschaften des Fluids beitragen, beispielsweise das Fließverhalten verbessern, einen Verschleiß- oder Korrosionsschutz bieten oder die Gleiteigenschaften bewegter Teile verbessern.

Das Additiv ist an der Umfangsseite des Filterelementes auf die außen liegenden Faltenspitzen aufgebracht, was den Vorteil bietet, dass die Filtrationsleistung des Filterelementes durch das Aufbringen des Additivs nicht eingeschränkt wird. Die Faltenspitzen werden zwar von dem Fluid angeströmt, so dass die Wirkstoffe des Additivs von den Fluid aufgenommen werden können. Da die Filtrationsleistung des Filterelementes aber über die Faltenflächen erzielt wird, die sich zwischen den radial außen liegenden und den radial innen liegenden Faltenspitzen des zickzackförmig gefalteten Filtermittels erstrecken, beeinträchtigt das Aufbringen des Additivs auf die außen liegenden Faltenspitzen die Filtrationsleistung nicht. Die für die Filtration zuständigen Faltenflächen bleiben grundsätzlich frei von dem Additiv. Da das Additiv auf Grund seiner Anordnung an den äußeren Faltenspitzen im Strömungsweg des Fluids liegt, ist gleichwohl eine wirksame Aufnahme der Additivsubstanzen in das Fluid gewährleistet.

Das zickzackförmig gefaltete Filtermittel ist bevorzugt in zylindrischer Konfiguration angeordnet und wird von dem zu reinigenden Fluid radial von außen nach innen durchströmt. Im Rahmen der Erfindung kommt aber auch eine platten- bzw. rechtförmige Konfiguration des zickzackförmig gefalteten Filtermittels in Betracht.

Das Additiv liegt in Form einer Additivraupe vor, die sich in Umfangsrichtung und/oder in Achsrichtung am Außenumfang des Filterelementes erstreckt. Bei einer Anordnung in Umfangsrichtung verläuft die Additivraupe zwischen mindestens zwei benachbarten Faltenspitzen, wobei zweckmäßigerweise eine Erstreckung über den gesamten Außenumfang vorgesehen ist, um unabhängig von der Position der Anströmung eine gleichmäßige Abgabe der Wirkstoffsubstanzen in das Fluid zu gewährleisten. Die Additivraupe liegt entweder als Ring vor, der sich an einer definierten axialen Position über den Umfang des Filterelementes erstreckt. Möglich ist aber auch eine spiralförmige Ausführung, in der die Klebstoffraupe spiralförmig um den Umfang des Filterelementes gewickelt ist.

Bei einer Erstreckung in Achsrichtung ist die Klebstoffraupe auf die Faltenspitze aufgebracht und erstreckt sich entlang der Faltenspitze einer Filterfalte. Möglich ist sowohl ein Aufbringen der Additivraupe auf nur eine oder eine beschränkte Anzahl von Faltenspitzen in Achsrichtung als auch ein Aufbringen auf sämtliche Faltenspitze.

Gemäß einer weiteren vorteilhaften Ausführung ist vorgesehen, dass ein Verstärkungsfaden entweder ringförmig oder spiralförmig um den Umfang des Filterelementes gewickelt ist, wobei das Additiv an dem Verstärkungsfaden anhaftet, der somit den Träger für das Additiv bildet. Das Additiv befindet sich hierbei insbesondere an der Außenseite des Verstärkungsfadens und ist dadurch der unmittelbaren Anströmung durch das Fluid ausgesetzt. Erreicht wird dies beispielsweise dadurch, dass das Additiv den Verstärkungsfaden umhüllt.

Möglich ist aber auch eine Ausführung, bei der das Additiv die zusätzliche Aufgabe eines Klebstoffes für die Anhaftung des Verstärkungsfadens am Umfang des Filterelementes bildet. In dieser Ausführung wird kein zusätzlicher Klebstoff für die Anhaftung des Verstärkungsfadens an den Spitzen der Filterfalten benötigt.

In weiterer zweckmäßiger Ausführung ist vorgesehen, dass das Additiv ausschließlich am Umfang des Filterelementes angeordnet ist, und zwar in der vorbeschriebenen Weise entweder in Alleinstellung als Additivraupe in Achsrichtung bzw. in Umfangsrichtung und/oder in Verbindung mit einem Verstärkungsfaden. Eine zusätzliche Aufnahme des Additivs entlang der Faltenflächen zwischen den radial außen liegenden Faltenspitzen und den radial innen liegenden Faltenspitzen wird in dieser Ausführung vermieden. Gleichwohl kann es aber gemäß einer weiteren Ausführung zweckmäßig sein, zusätzlich zumindest in ausgewählten Falten ein Additiv aufzubringen.

### Kurze Beschreibung der Zeichnungen

Weitere Vorteile und zweckmäßige Ausführungen sind den weiteren Ansprüchen, der Figurenbeschreibung und den Zeichnungen zu entnehmen.
Es zeigen:
- Fig. 1: eine perspektivische Ansicht eines zylindrischen Filterelementes mit einem zickzackförmig gefalteten Filtermittel, das am Außenumfang spiralförmig von einem Verstärkungsfaden um wickelt ist, wobei der Verstärkungsfaden mit einem Additiv versehen ist,
- Fig. 2: einen Schnitt durch eine Filtereinrichtung mit einem Filterelement gemäß Fig. 1,
- Fig. 3: eine Draufsicht auf das Filterelement,
- Fig. 4: einen Schnitt durch das Filterelement.

In den Figuren sind gleiche Bauteile mit gleichen Bezugszeichen versehen.

### Ausführungsformen der Erfindung

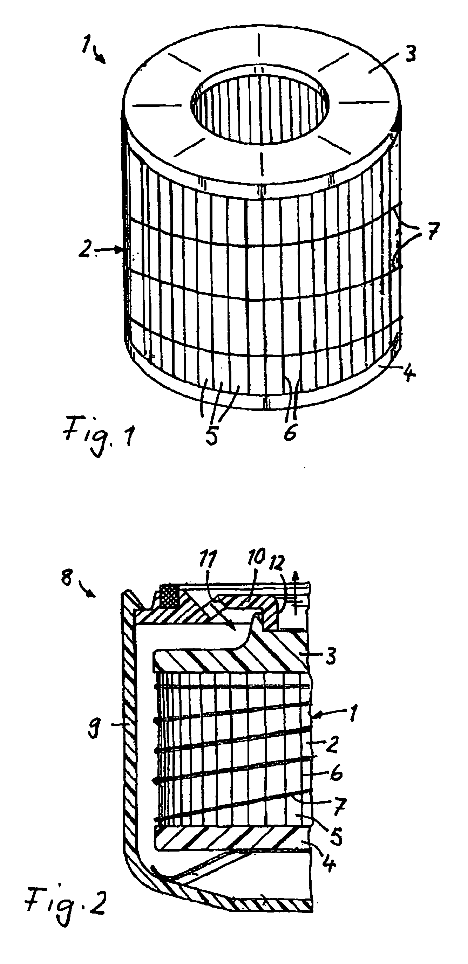

In Fig. 1 ist ein hohlzylindrisches Filterelement 1 dargestellt, das aus einem zickzackförmig gefalteten Filtermittel in hohlzylindrischer Anordnung besteht, dessen Falten 5 sich zumindest annähernd in Radialrichtung erstrecken. Auf Grund der zickzackförmigen Faltung des Filtermittels 2 ist der Außenumfang des Filterelementes von Faltenspitzen 6 gebildet, die radial außen liegen, wobei jede Falte 5 zusätzlich zu einer radial außen liegenden Faltenspitze 6 eine radial innen liegende Faltenspitze aufweist und zwischen den radial außen liegenden und den radial innen liegenden Faltenspitzen jeweils die Filterfalte mit einer Faltenfläche verläuft. Das Filterelement 1 wird radial von außen nach innen von dem zu filtrierenden Fluid durchströmt, so dass die Außenseite die Rohseite bildet und der zylindrische Innenraum des hohlzylindrischen Filterelementes die Reinseite, über die das gereinigte Fluid axial abgeleitet wird.

Das Filterelement 1 ist axial von jeweils einer Endscheibe 3 bzw. 4 eingefasst, wobei die Endscheiben 3, 4 unmittelbar auf die Stirnseiten des Filtermittels 2 aufgesetzt sind und diese in Achsrichtung strömungsdicht verschließen.

Am Außenumfang des Filterelementes 1 ist ein Verstärkungsfaden 7 angeordnet, der auf den Außenumfang des Filterelementes 1 aufgeklebt ist und sich spiralförmig über den Außenumfang erstreckt. Zweckmäßigerweise handelt es sich um einen einzigen, durchgehenden Verstärkungsfaden 7, wobei grundsätzlich auch mehrere einzelne Verstärkungsfäden in Betracht kommen. Außerdem ist es auch möglich, dass sich der eine oder die Mehrzahl von Verstärkungsfäden 7 ringförmig entlang des Außenumfangs in unterschiedlicher axialer Höhe erstrecken.

Erfindungsgemäß ist vorgesehen, dass an dem Verstärkungsfaden 7 ein Additiv anhaftet, welches chemische Wirksubstanzen an das heranströmende Fluid abgibt, um die physikalischen und/oder chemischen Eigenschaften des Fluids zu verbessern. Das Additiv kann den Verstärkungsfaden vollständig oder teilweise einhüllen, so dass der Verstärkungsfaden 7 das Trägerelement für das Additiv bildet, das beispielsweise in Gelform aufgebracht ist. Des Weiteren ist es möglich, dass das Additiv zugleich den Klebstoff bildet, mit dem der Verstärkungsfaden 7 am Außenumfang des Filterelementes 1 auf die Faltenspitzen aufgeklebt ist. Grundsätzlich möglich ist es aber auch, den Klebstoff, mit dem der Verstärkungsfaden 7 aufgeklebt ist, als separate Substanz von dem Additiv auszuführen.

In Fig. 2 ist das Filterelement 1 in seiner Einbauposition in einer Filtereinrichtung 8 dargestellt, die zusätzlich ein Filtergehäuse 9 umfasst, in das das Filterelement 1 als Wechselfilter einsetzbar ist. Das Filtergehäuse 9 ist von einem Gehäusedeckel 10 zu verschließen, in den eine Einlassöffnung 11 für die Zuleitung des zu reinigenden Fluids und eine Auslaßöffnung zur Ableitung des gereinigten Fluids eingebracht sind. Das über die Einlassöffnung 11 einströmende Fluid breitet sich in einen Ringraum zwischen der Innenwand des Filtergehäuses 9 und dem Außenumfang des Filterelementes 1 aus und durchströmt das Filterelement 1 radial von außen nach innen. Anschließend erfolgt die axiale Ableitung des gereinigten Fluids aus dem zylindrischen Innenraum des Filterelementes über die Auslassöffnung 12 im Gehäusedeckel 10. Die Fixierung des Filterefementes 1 innerhalb des Filtergehäuses 9 erfolgt über die Endscheiben 3 bzw. 4.

Das Filterelement 1 ist von dem Verstärkungsfaden 7 umwickelt, an dem wie vorbeschrieben das Additiv anhaftet, welches seine Wirksubstanzen nach und nach an das heranströmende Fluid abgibt. Die Rate, mit der die Wirksubstanzen von dem Additiv an das Fluid übergehen, hängt von verschiedenen physikalischen und chemischen Parametern ab, unter anderem von der Konsistenz des am Verstärkungsfadens 7 anhaftenden Additivs, das vorzugsweise in Gelform vorliegt.

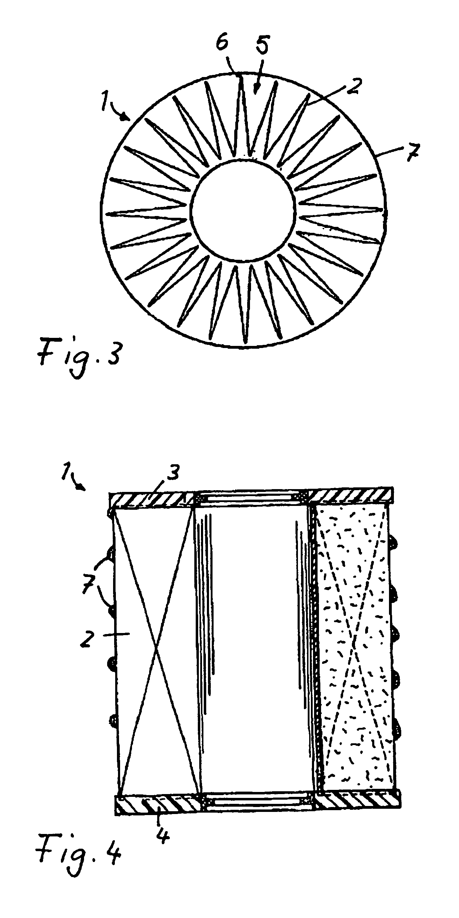

Wie der Schnittdarstellung gemäß Fig. 3 zu entnehmen, ist das Filtermittel 2 zickzackförmig gefaltet und geometrisch in Form eines Hohlzylinders angeordnet, so dass ein zylindrischer Innenraum gebildet ist, der die Reinseite darstellt. Der Verstärkungsfaden 7 mit dem Additiv haftet ausschließlich an den Faltenspitzen 6 der einzelnen Filterfalten 5 an. Innerhalb der Filterfalten 5 befindet sich dagegen kein Additiv, so dass die Filterfalten 5 ohne Einschränkung der Filtrationsleistung für die Filtration des Fluids genutzt werden können.

Im Längsschnitt gemäß Fig. 4 ist zu erkennen, dass sich der spiralförmig gewickelte Verstärkungsfaden 7, welcher mit dem Additiv versehen ist, axial über die Länge des Filterelementes 2 erstreckt. Zweckmäßigerweise ist ein einziger, durchgehender Verstärkungsfaden 7 vorgesehen, der sich spiralförmig um den Außenumfang des Filterelementes 2 windet und an den Faltenspitzen anhaftet.

Anstelle oder zusätzlich zu dem Verstärkungsfaden ist das Additiv in Raupenform auf den Außenumfang des Filterelements aufgebracht. In diesem Fall ist mit Bezugszeichen 7 die Additivraupe am Außenumfang bezeichnet.

## Patentansprüche

1. Filtereinrichtung zur Filtration eines Fluids, mit einem radial zu durchströmenden Filterelement (1), das aus einem zickzackförmig gefalteten Filtermittel (2) besteht, an dem ein Additiv zur funktionalen Änderung der Fluideigenschaften angeordnet ist, wobei das Additiv am Umfang des Filterelements (1) auf die außen liegenden Faltenspitzen (6) aufgebracht ist, **dadurch gekennzeichnet, dass** das Additiv als Additivraupe ausgebildet ist, die sich am Umfang des Filterelements (1) in Umfangsrichtung erstreckt.

2. Filtereinrichtung nach Anspruch 1, **dadurch gekennzeichnet, dass** das Additiv an einem Verstärkungsfaden (7) angeordnet ist.

3. Filtereinrichtung nach Anspruch 2, **dadurch gekennzeichnet, dass** das Additiv den Klebstoff für die Anhaftung des Verstärkungsfadens (7) am Umfang des Filterelements (1) bildet.

4. Filtereinrichtung nach einem der Ansprüche 1 bis 3, **dadurch gekennzeichnet, dass** das Additiv sich entlang einer Faltenspitze (6) in Achsrichtung erstreckt.

5. Filtereinrichtung nach einem der Ansprüche 1 bis 4, **dadurch gekennzeichnet, dass** das Additiv in Gelform vorliegt.

6. Filtereinrichtung nach einem der Ansprüche 1 bis 5, **dadurch gekennzeichnet, dass** das Additiv ausschließlich am Umfang des Filterelements (1) angeordnet ist.

7. Filtereinrichtung nach einem der Ansprüche 1 bis 6, **dadurch gekennzeichnet, dass** das zickzackförmig gefaltete Filtermittel (2) als hohlzylindrisches Filterelement (1) angeordnet ist.

## Claims

1. Filter device for filtering a fluid, with a filter element (1) flowed through radially that consists of a zigzag-folded filter medium (2) at which an additive for the functional change of the fluid properties is disposed, the additive being applied on the circumference of the filter element (1) onto outwardly positioned fold tips (6), **characterized in that** the additive is designed as additive bead that extends on the circumference of the filter element (1) in circumferential direction.

2. Filtering device according to claim 1, **characterized in that** the additive is disposed on a reinforcement thread (7).

3. Filtering device according to claim 2, **characterized in that** the additive provides the adhesive for adhering the reinforcement thread to the circumference of the filter element (1).

4. Filtering device according to one of the claims 1 to 3, **characterized in that** the additive extends along a fold tip (6) in axial direction.

5. Filtering device according to one of the claims 1 to 4, **characterized in that** the additive is provided as gel.

6. Filtering device according to one of the claims 1 to 5, **characterized in that** the additive is disposed exclusively on the circumference of the filter element (1).

7. Filtering device according to one of the claims 1 to 6, **characterized in that** the zigzag-folded filter medium (2) is disposed as hollow-cylindrical filter element (1).

## Revendications

1. Dispositif de filtration destiné à la filtration d'un fluide, avec un élément filtrant (1) par lequel un flux peut passer en sens radial et composé d'un moyen filtrant (2) plié en accordéon sur lequel est disposé un additif servant à modifier les propriétés fonctionnelles du fluide, l'additif étant monté sur les pointes des plis (6) disposées à l'extérieur sur la circonférence de l'élément filtrant (1), **caractérisé en ce que** l'additif est réalisé en tant que cordon d'additif qui s'étend en sens circonférentiel sur la circonférence de l'élément filtrant (1).

2. Dispositif de filtration selon la revendication 1, **caractérisé en ce que** l'additif est disposé sur un fil de renfort (7).

3. Dispositif de filtration selon la revendication 2, **caractérisé en ce que** l'additif sert de colle permettant de faire adhérer le fil de renfort (7) sur la circonférence de l'élément filtrant (1).

4. Dispositif de filtration selon l'une des revendications 1 à 3, **caractérisé en ce que** l'additif s'étend en sens axial le long d'une pointe de pli (6).

5. Dispositif de filtration selon l'une des revendications 1 à 4, **caractérisé en ce que** l'additif se présente sous forme de gel.

6. Dispositif de filtration selon l'une des revendications 1 à 5, **caractérisé en ce que** l'additif est exclusivement disposé sur la circonférence de l'élément filtrant (1).

7. Dispositif de filtration selon l'une des revendications 1 à 6, **caractérisé en ce que** le moyen filtrant (2) plié en accordéon est disposé en tant qu'élément filtrant (1) en forme de cylindre creux.
